# EUROPEAN PATENT APPLICATION

(11) **EP 4 768 819 A1**
(43) Date of publication of application: **01.07.2026**
(21) Application number: 25227776.9
(22) Date of filing: 30.12.2025
(51) Int. Cl.: F24S 10/70, F24S 23/71, F24S 23/74, F24S 80/40

(54) **INTERNAL ADJUSTABLE SOLAR THERMAL PANEL FOR OPTIMIZING SOLAR EFFICIENCY AND CARDINAL ORIENTATION**

(30) Priority: 31.12.2024 PT 2024119969
(71) Applicant: Oprimee - Innovation Design Engineering Solutions, Lda, 3405-155 Oliveira do Hospital (PT)
(72) Inventor: DOS SANTOS ALMEIDA NUNES, João Miguel, 3405-155 OLIVEIRA DO HOSPITAL (PT)
(74) Representative: Patentree

(57) **Abstract**

The present disclosure relates to an adjustable solar thermal panel for optimizing solar efficiency independently of the orientation and inclination of a supporting surface the panel being configured as a modular unit, comprising: a fixed external housing configured to be rigidly mounted to a roof, façade or other support without external inclination adjustment; an internal optical-thermal module arranged within the housing and comprising: at least one thermal absorber including at least one hydraulic tube for conveying a heat-transfer fluid; a plurality of parabolic reflective elements configured to concentrate incident solar radiation onto the hydraulic tube along a longitudinal focal line; a sealed internal chamber formed within the housing and enclosing the internal optical-thermal module, the sealed internal chamber being configured to reduce convective heat losses; and an internal mechanical adjustment mechanism comprising a worm screw mechanism mechanically coupled to the internal optical-thermal module and configured to adjust an angular position of the optical-thermal module relative to the fixed external housing; wherein the internal mechanical adjustment mechanism defines at least four predefined angular positions of the optical-thermal module corresponding to seasonal solar positions; wherein adjustment of the angular position is performed exclusively inside the fixed external housing such that the external housing remains stationary during operation, thereby reducing wind-induced mechanical loads and maintaining optical alignment independently of the orientation and inclination of the supporting surface; and wherein the panel is configured to be combined with a plurality of identical panels in modular arrays connected hydraulically and/or structurally to form scalable solar thermal installations.

## Description

### TECHNICAL FIELD

The present disclosure relates to an internal adjustable solar thermal panel for optimizing solar efficiency and cardinal orientation.

More specifically, it is disclosed an internal adjustable solar thermal panel which optical and thermal optimization is achieved by internally movable elements and integrated concentrating structures arranged within a fixed external housing. The disclosed technology eliminates the need for external tracking systems and significantly reduces wind-induced losses and efficiency degradation typically associated with conventional parabolic concentrators.

### BACKGROUND

The increasing demand for sustainable and renewable energy sources is driven by the urgent need to reduce dependence on fossil fuels, which currently account for approximately 80% of global energy consumption. While photovoltaic solar energy has garnered a great deal of attention in recent years, solar thermal systems are also emerging as a highly efficient solution with great potential for harnessing solar energy. Compared to photovoltaic conversion, solar thermal systems are designed to capture the sun's energy and convert it directly into heat instead of electricity. This heat can be used to heat water, air-condition rooms and even industrial processes.

Solar thermal energy is widely used in different locations around the world, in particular in highly sunny regions such as southern Europe, Latin America, Africa and parts of Asia. This technology's potential has been widely recognized, with solar thermal systems contributing significantly to reducing dependence on conventional electricity and the consequent reduction in greenhouse gas emissions. In fact, water heating and other thermal applications account for the majority of global solar thermal energy use.

Despite their great potential, solar thermal systems still have significant challenges, particularly in relation to the efficiency of converting solar radiation into usable heat and the need to optimize thermal absorption and retention. Traditional systems, such as flat-plate solar thermal panels and vacuum collectors, have proved effective in various applications, but have limitations in terms of cost, complexity of installation and maintenance, as well as loss of efficiency in extreme weather conditions.

Flat-plate solar thermal panels, for instance, are composed of an absorbent surface that captures solar radiation and converts it into heat. This heat is then transferred to a heating fluid, such as water or thermal oil, which circulates through the system. Although these systems are simple and relatively inexpensive, they have limited performance in places with less sunny weather or in areas with high temperatures, where heat loss due to radiation is more significant.

Vacuum solar collectors, however, are more efficient because the vacuum between the tubes acts as a thermal insulator, significantly reducing heat loss. Nevertheless, these systems tend to be more expensive and complex, as well as requiring greater care during installation and maintenance. The combination of high efficiency and lower cost remains one of the main challenges in the evolution of solar thermal panel technology.

The main current challenge in solar thermal systems lies in optimizing thermal efficiency and reducing heat losses. Thermal efficiency depends directly on the system's ability to collect, transfer and store solar energy efficiently, while minimizing thermal losses during the process. Factors such as the durability of materials and resistance to climatic variations also influence solar thermal systems' performance and longevity. Given the current technological context, it is clear that continuous innovation in solar thermal system materials and design is crucial to overcoming existing challenges and maximizing this renewable energy source's potential.

These facts are disclosed in order to illustrate the technical problem addressed by the present disclosure.

### GENERAL DESCRIPTION

The present disclosure relates to an internal adjustable solar thermal panel for optimizing solar efficiency and cardinal orientation.

The present disclosure comprises an adjustable solar thermal panel for optimizing solar efficiency and cardinal orientation, comprising: a structure containing adjustable parabolic reflective elements configured to concentrate radiation onto a separate thermal absorber for capturing solar radiation; a worm screw mechanism for adjusting the inclination of the parabolic reflective elements configured to concentrate radiation onto a separate thermal absorber; a protective external structure configured to minimize the effects of wind on the parabolic reflective elements configured to concentrate radiation onto a separate thermal absorber and improve thermal efficiency; wherein the parabolic reflective elements configured to concentrate radiation onto a separate thermal absorber are configured to be adjusted to four preset angular positions, each corresponding to a season of the year, enabling optimized solar energy capture throughout the year.

The adjustable solar thermal panel described involves a structure made up of adjustable parabolic reflective elements configured to concentrate radiation onto a separate thermal absorber that capture solar radiation for conversion into heat. The parabolic reflective elements configured to concentrate radiation onto a separate thermal absorber are mounted with a manually-controlled worm screw mechanism that allows their position to be adjusted to maximize efficiency during the different seasons of the year. This adjustment is made by means of a manual knob, with four specific positions that correspond to the four seasons, allowing for optimized performance throughout the entire year. The structure of the panel is designed to reduce the effects of wind, which results in greater thermal efficiency and a reduction in material and installation costs. The design of the structure also contributes to the aesthetics of the panel, making it more attractive and discreet in urban or residential environments, while providing additional security against strong winds and cyclones. The described technology solves the traditional challenges faced by conventional solar thermal systems, offering a more affordable and robust solution for capturing solar thermal energy.

The proposed technology relates to an adjustable solar thermal panel that aims to improve efficiency in capturing solar energy, reduce installation and operating costs and ensure greater safety and durability, especially in regions subject to adverse weather conditions such as strong winds and cyclones.

In the present disclosure, the internal decoupling between the structural orientation of the collector housing and the optical orientation of the absorber. Unlike conventional collectors in which inclination and orientation are achieved by moving the entire panel, the technology maintains the external housing fixed and performs all angular optimization internally, thereby reducing wind-induced loads, preserving optical alignment and enabling operation on unfavourably oriented supporting surfaces.

The disclosed technology provides a solar thermal panel with substantially improved performance relative to conventional flat-plate collectors and external concentrator systems. By combining internal mini-parabolic concentration, a sealed greenhouse chamber and an internal solar tracking mechanism, the disclosed technology significantly reduces convective losses, improves optical efficiency and maintains high performance at elevated temperature differentials.

The internal adjustment of the absorber eliminates external movable structures, reduces mechanical stress from wind loads, improves durability and minimizes visual impact. The higher useful thermal output per unit area enables a substantial reduction in required installation surface, which is particularly advantageous in urban environments, small roofs and retrofit applications. The panel is compatible with existing hydraulic circuits and control systems and may be scaled to different panel sizes.

A façade refers to an exterior vertical or substantially vertical surface of a building, including structural walls, curtain walls, or cladding systems, to which the adjustable solar thermal panel may be mounted.

A fixed external housing designates a rigid enclosure configured to be mounted to a façade in a stationary position and to remain substantially immobile during operation of the adjustable solar thermal panel.

An internal optical-thermal module refers to an assembly arranged within the fixed external housing and comprising optical elements configured to concentrate solar radiation and at least one thermal absorber configured to convert the concentrated radiation into thermal energy.

A thermal absorber designates a component configured to absorb solar radiation and transfer the absorbed energy to a heat-transfer fluid. A hydraulic tube designates a tubular conduit forming part of the thermal absorber and configured to convey the heat-transfer fluid.

Parabolic reflective elements designate reflective optical components having a parabolic or substantially parabolic profile and configured to concentrate incident solar radiation onto a focal region extending along a longitudinal direction.

A longitudinal focal line refers to an elongate focal region extending substantially parallel to the hydraulic tube and along which concentrated solar radiation is directed.

A sealed internal chamber designates a volume enclosed within the fixed external housing and configured to limit convective heat exchange between the internal optical-thermal module and the external environment.

An internal mechanical adjustment mechanism designates a mechanical arrangement arranged within the fixed external housing and configured to modify the angular position of the internal optical-thermal module relative to the fixed external housing.

A worm screw mechanism refers to a mechanical transmission comprising a worm and a cooperating worm wheel, configured to convert rotational motion into controlled angular displacement of the internal optical-thermal module.

Angular position refers to the orientation of the internal optical-thermal module relative to a reference plane of the fixed external housing.

Predefined angular positions refer to discrete angular orientations of the internal optical-thermal module determined by the internal mechanical adjustment mechanism and corresponding to different seasonal solar elevation conditions.

Manual actuation refers to operation of the internal mechanical adjustment mechanism by a user using hand force only, without the use of powered tools.

A protective film refers to a radiation-transmissive layer forming part of the fixed external housing and configured to allow passage of solar radiation while limiting ingress of dust, airborne particles, or moisture into the sealed internal chamber.

Extreme weather conditions refer to environmental conditions including high wind speeds, gusts, and storm events capable of generating elevated aerodynamic loads on façade-mounted structures.

In an embodiment, the adjustable solar thermal panel comprises adjustable parabolic reflective elements configured to concentrate radiation onto a separate thermal absorber, which are placed inside a structure that protects the solar capture surfaces from the effects of the wind, optimizing the conversion of solar radiation into heat.

In an embodiment, the adjustable parabolic reflective elements configured to concentrate radiation onto a separate thermal absorber are adjusted by a manually operated worm screw mechanism, allowing the panel's inclination to be adjusted.

In an embodiment, the adjustable parabolic reflective elements configured to concentrate radiation onto a separate thermal absorber can be set to four different positions for the four seasons.

In an embodiment, the adjustable solar thermal panel does not need any additional structure to change the inclination, in order to optimize the conversion of solar radiation into heat.

The adjustable solar thermal panel reduces the footprint, improves the aesthetics of the system and offers a safer and more efficient means of harnessing solar thermal energy, at a significantly lower cost compared to traditional systems.

An aspect of the disclosure discloses an adjustable solar thermal panel for optimizing solar efficiency and cardinal orientation, comprising: a structure containing adjustable parabolic reflective elements configured to concentrate radiation onto a separate thermal absorber for capturing solar radiation; a worm screw mechanism for adjusting the inclination of the parabolic reflective elements configured to concentrate radiation onto a separate thermal absorber; a protective external structure configured to minimize the effects of wind on the parabolic reflective elements configured to concentrate radiation onto a separate thermal absorber and improve thermal efficiency; wherein the parabolic reflective elements configured to concentrate radiation onto a separate thermal absorber are configured to be adjusted to four preset angular positions, each corresponding to a season of the year, enabling optimized solar energy capture throughout the year.

An aspect of the disclosure discloses an adjustable solar thermal panel for optimizing solar efficiency independently of the orientation and inclination of a supporting surface the panel being configured as a modular unit, comprising: a fixed external housing configured to be rigidly mounted to a roof, façade or other support without external inclination adjustment; an internal optical-thermal module arranged within the housing and comprising: at least one thermal absorber including at least one hydraulic tube for conveying a heat-transfer fluid; a plurality of parabolic reflective elements configured to concentrate incident solar radiation onto the hydraulic tube along a longitudinal focal line; a sealed internal chamber formed within the housing and enclosing the internal optical-thermal module, the sealed internal chamber being configured to reduce convective heat losses; and an internal mechanical adjustment mechanism comprising a worm screw mechanism mechanically coupled to the internal optical-thermal module and configured to adjust an angular position of the optical-thermal module relative to the fixed external housing; wherein the internal mechanical adjustment mechanism defines at least four predefined angular positions of the optical-thermal module corresponding to seasonal solar positions; wherein adjustment of the angular position is performed exclusively inside the fixed external housing such that the external housing remains stationary during operation, thereby reducing wind-induced mechanical loads and maintaining optical alignment independently of the orientation and inclination of the supporting surface; and wherein the panel is configured to be combined with a plurality of identical panels in modular arrays connected hydraulically and/or structurally to form scalable solar thermal installations.

In an embodiment, the worm screw mechanism of the adjustable solar thermal panel comprises a manual knob.

In an embodiment, the protective external structure of the adjustable solar thermal panel is coated with a film resistant to UV radiation and capable of protecting the parabolic reflective elements configured to concentrate radiation onto a separate thermal absorber from dust and airborne particles.

In an embodiment, the protective film used in the adjustable solar thermal panel comprises a transparent material selected from a list consisting of glass, polycarbonate (PC), polymethyl methacrylate (PMMA), polyamide-imide (PAI), polyester ether ketone (PEEK), polyetherimide (PEI) and their combinations thereof.

In an embodiment, the panel of the adjustable solar thermal panel is configured as a standardized modular unit adapted to be hydraulically connected in series and/or in parallel with other identical panels to form scalable solar thermal systems.

In an embodiment, the parabolic reflective elements configured to concentrate radiation onto a separate thermal absorber of the adjustable solar thermal panel are configured to reduce the panel's footprint, enhancing its compactness and suitability for urban or residential environments.

In an embodiment, the protective external structure of the adjustable solar thermal panel is configured to offer resistance to extreme weather conditions, including strong winds and cyclones, ensuring safety and durability.

In an embodiment, the adjustable worm screw mechanism of the adjustable solar thermal panel comprises stops to fix the parabolic reflective elements configured to concentrate radiation onto a separate thermal absorber in four predefined positions corresponding to the four seasons.

In an embodiment, the parabolic reflective elements configured to concentrate radiation onto a separate thermal absorber of the adjustable solar thermal panel are arranged within the structure to optimize solar energy absorption and minimize heat loss.

In an embodiment, the parabolic reflective elements configured to concentrate radiation onto a separate thermal absorber of the adjustable solar thermal panel are configured to concentrate solar radiation onto hydraulic tubes, facilitating efficient conversion of solar energy into heat.

In an embodiment, the protective structure of the adjustable solar thermal panel is configured to reduce the aerodynamic drag caused by wind, further improving the panel's performance and safety.

In an embodiment, the external housing and the internal optical-thermal module of the adjustable solar thermal panel are dimensioned so as to allow multiple panels to be arranged side-by-side or stacked while maintaining continuous optical and hydraulic functionality.

In an embodiment, the fixed external housing of the adjustable solar thermal panel is configured for installation on vertical or substantially vertical façades, enabling effective solar thermal operation independently of façade cardinal orientation.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the internal adjustable solar thermal panel.
**Figure 2****:** Schematic representation of a method of operating an embodiment of the internal adjustable solar thermal panel.
**Figure 3****:** Graphic representation of the relationship between useful thermal power output and incident solar irradiance for a conventional flat-plate solar thermal collector and for the now disclosed solar thermal panel.
**Figure 4****:** Graphic representation of the relationship between the thermal efficiency of a solar thermal collector and the temperature difference ΔT between the mean absorber or fluid temperature and the ambient temperature.
**Figure 5****:** Graphic representation of the comparison of the useful thermal power output as a function of incident solar irradiance for a fixed temperature difference ΔT of 40 K.
**Figure 6****:** Graphic representation of the minimum collector area required to deliver a constant useful thermal power.
**Figure 7****:** Graphic representation a three-dimensional representation of thermal efficiency as a function of both solar irradiance and temperature difference ΔT for a conventional flat-plate solar thermal collector and for the collector now disclosed.
**Figure 8****:** Graphic representation of an heatmap illustrating the percentage gain in thermal performance of the disclosed solar thermal panel.

### DETAILED DESCRIPTION

The present disclosure relates to an internal adjustable solar thermal panel for optimizing solar efficiency and cardinal orientation. An adjustable solar thermal panel comprises a fixed external housing configured to be rigidly mounted to a building façade in a stationary position. An internal optical-thermal module is arranged within the housing and includes a thermal absorber with at least one hydraulic tube for conveying a heat-transfer fluid and a plurality of parabolic reflective elements configured to concentrate incident solar radiation onto the hydraulic tube along a longitudinal focal line. The housing defines a sealed internal chamber that reduces convective heat losses. An internal mechanical adjustment mechanism comprising a worm screw mechanism is mechanically coupled to the optical-thermal module and is configured to adjust an angular position of the module relative to the fixed housing between predefined angular positions corresponding to seasonal solar conditions. Adjustment is performed exclusively within the housing such that the housing remains stationary during operation, thereby maintaining optical alignment and reducing wind-induced mechanical loads on the façade independently of the orientation of the supporting surface.

The present disclosure relates to an adjustable solar thermal panel designed to optimize solar energy capture independently of the orientation and inclination of a supporting surface, to reduce installation and operating costs, and to increase security and durability, particularly in locations exposed to adverse weather conditions such as strong winds and cyclones for use concentrate solar thermal energy, and optimizing the cardinal orientation for a fixed solar panel, does not depend on the inclination of the existing infrastructure for mounting the solar thermal panel, and can work at angles from zero to 90°, the angle of the latitude of the place, and others, and also even for situations with negative inclinations and positioned to the north cardinal orientation. The panel comprises a fixed external housing and an internal optical-thermal module arranged within the housing, the module including at least one thermal absorber with a hydraulic tube and a plurality of internal parabolic reflective elements configured to concentrate solar radiation onto the absorber. The housing defines a sealed internal chamber that reduces convective heat losses. The system is characterized by internal mechanical adjustment mechanism, preferably a worm screw mechanism, of the concentrate solar parabolic troughs, that avoided the inclination of the panel, adjusts the angular position of the internal optical-thermal module relative to the fixed housing, with capacity to adjust of the angle optimized for the maximum solar thermal energy capture, which are mounted inside a protective structure that shields the solar collection surfaces from the effects of the wind, optimizing the conversion of solar radiation into heat. The parabolic troughs are manually or automatic adjustable by means of a worm screw mechanism, allowing the system's inclination to be adjusted. he adjustment mechanism defines at least four predefined angular positions, corresponding to the four seasons of the year solar conditions. Through the invention, there is no need for additional structures to change the inclination, optimizing the conversion of solar radiation into heat. The panel is configured as a modular unit combinable with other identical panels in scalable installations, thereby reducing installation area, improving wind resistance, and enhancing thermal efficiency compared with conventional solar thermal collectors. The internal adjustable solar panel reduces the footprint, improves the aesthetics of the system and offers a safer and more efficient solution for capturing solar thermal energy, at a significantly lower cost compared to traditional systems.

In operation, the panel is installed in a fixed position on a roof, façade, ground support or other surface, without any external inclination adjustment mechanism. The internal absorber module is then adjusted to the desired angular position by the internal tracking mechanism, either manually or automatically. The internal system follows the solar trajectory on a seasonal or continuous basis without any external movement of the panel housing. The internal movement is protected from environmental exposure, operates silently and experiences reduced mechanical wear.

In an embodiment, the internal solar tracking mechanism positions the absorber module with an angular accuracy of 1 degree. Mechanical clearances of articulated joints are limited to less than 0.5 degrees, due to the use of a worm screw mechanism with inherent self-locking properties. This configuration ensures that the annual captured energy remains within approximately ninety-seven to ninety-nine percent of the theoretical maximum achievable for the given location.

In an embodiment, the articulation axis of the internal absorber module is dimensioned to withstand a minimum bending moment of at least 250 newton-meters, corresponding to at least three times the maximum moment generated by the weight of the absorber module. The internal actuator associated with the worm screw mechanism is selected with a nominal force of at least 300 newtons in order to ensure reliable and safe operation under temperature variations, frictional loads and long-term mechanical wear.

The internal solar tracking mechanism allows a total angular adjustment range of at least sixty degrees. In an embodiment, the internal absorber module is adjustable from approximately minus twenty degrees to plus forty degrees relative to the median plane of the panel housing. This range allows compensation for different roof inclinations and enables operation in predefined seasonal positions while maintaining additional adjustment capability for fine optimization throughout the year.

In an embodiment corresponding to an installation at a latitude of approximately forty degrees north, the internal solar tracking mechanism defines four reference seasonal positions for the absorber relative to the horizontal plane. The optimal inclination angle of the absorber may be approximated as a function of geographic latitude and solar declination.

For typical seasonal conditions, the optimal absorber inclination relative to the horizontal is approximately sixty-four degrees during the winter solstice, approximately forty degrees during the spring and autumn equinoxes, and approximately seventeen degrees during the summer solstice. When the external panel housing is installed with a fixed inclination of approximately thirty degrees, the internal adjustment angles required to reach these optimal absorber orientations are approximately plus thirty-four degrees for winter operation, approximately plus ten degrees for spring and autumn operation, and approximately minus thirteen degrees for summer operation.

Accordingly, an internal adjustment range between minus twenty degrees and plus forty degrees enables the panel to closely approximate the optimal seasonal angles for a latitude of approximately forty degrees north. The internal solar tracking mechanism may define at least four discrete internal reference positions corresponding to winter, spring, autumn and summer operation, and may optionally include an intermediate annual position for simplified operation.

In an embodiment, the mini-parabolic reflective elements configured to concentrate radiation onto a separate thermal absorber are formed as concave reflective elements with a defined parabolic geometry characterized by a focal length selected to coincide with the position of the hydraulic tube or absorber surface. The troughs have a depth-to-width ratio selected to provide effective concentration while remaining compatible with the internal dimensions of the panel housing. The reflective surfaces exhibit a solar reflectivity of at least eighty-five percent, and preferably greater than ninety percent, over the relevant solar spectrum.

The parabolic geometry is configured such that incident solar radiation is concentrated onto the absorber with minimal optical loss, while maintaining a compact form factor suitable for integration within a flat panel structure. The internal arrangement of the troughs is optimized to minimize shading losses and thermal leakage.

In an embodiment, the worm screw mechanism positions the optical-thermal module with an angular accuracy of ±1 degree.

In an embodiment, the fixed external housing is mounted such that a distance between a center of aerodynamic load and a structural support plane is less than 0.2 m, thereby reducing wind-induced bending moments by at least 70% compared with externally inclined collectors

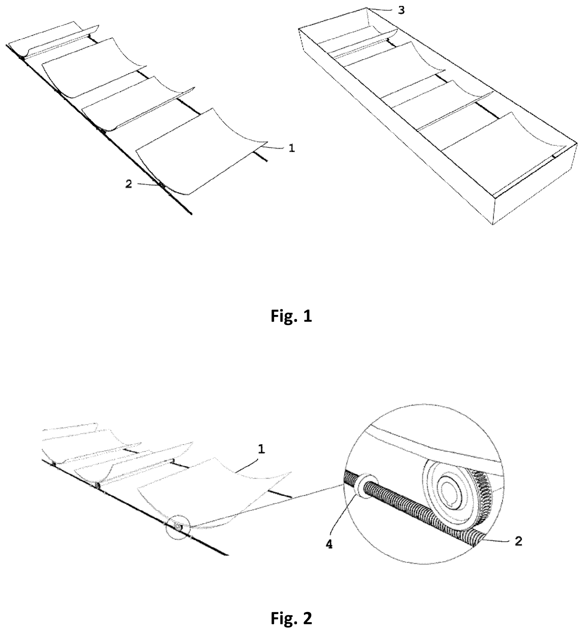

The adjustable solar thermal panel, represented in Fig. 1 comprises a structure that contains several adjustable solar parabolic reflective elements configured to concentrate radiation onto a separate thermal absorber (1) mounted on a worm screw mechanism (2). This mechanism allows the parabolic reflective elements configured to concentrate radiation onto a separate thermal absorber (1) to be manually adjusted to different angular positions, which are preset to optimize the capture of solar radiation during the four seasons of the year. The parabolic reflective elements configured to concentrate radiation onto a separate thermal absorber (1) are arranged to maximize solar absorption, while the outer structure (3) of the unit protects the parabolic reflective elements configured to concentrate radiation onto a separate thermal absorber from the wind, minimizing heat loss and offering greater resistance to adverse weather conditions. Manual adjustment can be made by a knob, allowing the user to easily change the inclination of the parabolic reflective elements configured to concentrate radiation onto a separate thermal absorber as required, without the need for complex automatic devices or additional structures for inclination control.

In an embodiment, the worm screw mechanism (2) used to control the movement of the adjustable parabolic reflective elements configured to concentrate radiation onto a separate thermal absorber (1) is represented in greater detail in Fig. 2. This mechanism offers direct manual control over the inclination of the parabolic reflective elements configured to concentrate radiation onto a separate thermal absorber (1). The use of a worm screw mechanism (2) allows for smooth and precise adjustment. The mechanism is designed to be robust and easy to operate, allowing it to be adjusted by anyone, without the need for specialized technical knowledge.

The focus on reducing the area occupied by the panel with a compact and efficient configuration is also an important point to highlight in this adjustable solar thermal panel. The parabolic reflective elements configured to concentrate radiation onto a separate thermal absorber are optimally positioned within the structure, making the most effective use of space compared to conventional solar thermal systems, which generally occupy large areas.

The external structure (3) of the panel has also been designed to be aesthetically pleasing, allowing the system to blend harmoniously into residential or urban environments. This reduction in size does not compromise thermal efficiency, but contributes to a more discreet and visually appealing system.

The adjustable solar thermal panel also has a safety guarantee for extreme weather conditions, such as cyclones or strong winds, avoided the necessity to a fixing inclined structure, not in parallel and joins the lower surface, which cause (1) vulnerabilities to wind and other adverse weather conditions and (2) aesthetic problem. The structure (3) surrounding the parabolic reflective elements configured to concentrate radiation onto a separate thermal absorber (1) is designed to minimize the impact of wind, offering a robust solution that protects the solar capture surfaces from damage and loss of efficiency. This feature is especially important in regions prone to severe weather phenomena, ensuring that the system continues to operate effectively and safely, even under adverse conditions.

The adjustable solar thermal panel, that use concentrate solar thermal energy (1) applied inside of an external structure protected with a film (3) also has a safety guarantee to avoid the cleaning problems and decay of energy efficiency originated by caused by dust and other airborne particles with high negative impact in the normal concept of concentrated solar thermal energy.

Figure 1 illustrates the general concept of the technology, with a representation of the structure containing the adjustable parabolic reflective elements configured to concentrate radiation onto a separate thermal absorber (1), assembled using a worm screw mechanism (2) (i) and an external structure with a superior protective functional film with transparency and resistance for UV radiation, like glass, PC (polycarbonate), PMMA (acrylic), Polyamide-imide (PAI), Polyester ether ketone (PEEEK), Polyetherimide (PEI), and others (3), where is fixed a hydraulic tube to capture the thermal solar energy, providing the equipment with greater resistance to adverse weather conditions decrease the effect of wind and others weather conditions in the parabolic concentrate panel (ii).

Figure 2 shows in more detail the method of operating the adjustable parabolic reflective elements configured to concentrate radiation onto a separate thermal absorber (1), that can be fixed in four positions with the aid of stops (4).

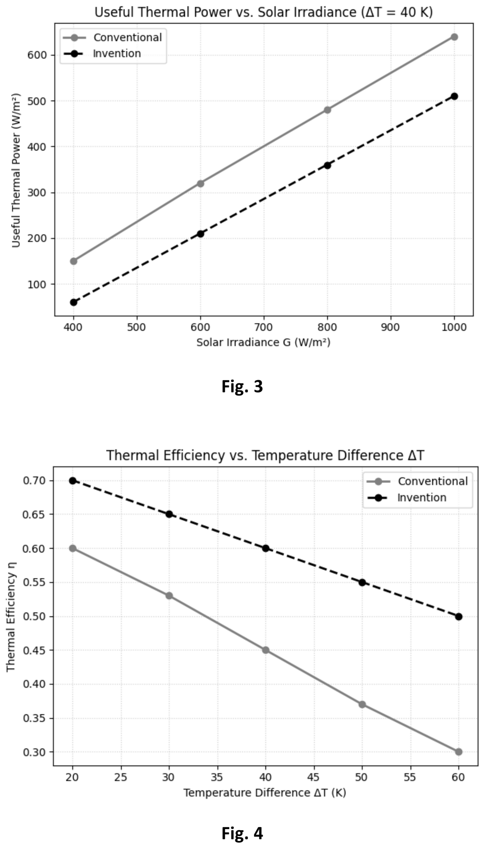

Figure 3 illustrates the relationship between useful thermal power output and incident solar irradiance for a conventional flat-plate solar thermal collector and for the now disclosed solar thermal panel, which integrates internal mini-parabolic concentrators, a sealed greenhouse chamber and an internal solar tracking mechanism. The comparison demonstrates that, over the entire range of solar irradiance levels considered, the collector according to the disclosed technology exhibits a significantly higher and more favourable response than the conventional panel. The useful thermal power delivered by the disclosed technology increases in a substantially linear manner with increasing irradiance, with a higher slope than that of the conventional collector. This indicates that the technology converts incremental solar radiation into useful thermal energy more efficiently across both low and high irradiance conditions. As irradiance increases, the relative performance advantage of the technology becomes progressively more pronounced. While the conventional flat-plate collector is increasingly affected by thermal losses, particularly convective and radiative losses at higher operating temperatures, the technology maintains a higher fraction of useful energy conversion. This behaviour is attributed to the combined effects of reduced convective losses provided by the internal greenhouse chamber, improved optical interception and concentration by the mini-parabolic reflectors, and continuous optimization of the angle of incidence by the internal tracking mechanism. The results further indicate that the collector according to the disclosed technology scales more effectively with irradiance than conventional panels, preserving higher efficiency levels as solar input increases. Consequently, under high-irradiance conditions, which are particularly relevant in sunny climates and during peak solar hours, the technology delivers disproportionately higher useful thermal power per unit area. This characteristic contributes directly to reduced required collector surface, improved annual energy yield and enhanced suitability for installations where available area is limited. Overall, the analysis confirms that the technology not only improves efficiency at specific operating points, but also fundamentally enhances the irradiance-to-power conversion behaviour of the solar thermal panel when compared to conventional flat-plate technologies.

Figure 4 illustrates the relationship between the thermal efficiency of a solar thermal collector and the temperature difference ΔT between the mean absorber or fluid temperature and the ambient temperature. The comparison is made between a conventional flat-plate solar thermal collector and the collector according to the disclosed technology. The graph shows that the thermal efficiency of the conventional collector decreases rapidly as the temperature difference increases. This behaviour is characteristic of flat-plate collectors exposed directly to ambient airflow, in which convective and radiative heat losses rise significantly with increasing operating temperature, leading to a pronounced reduction in useful energy conversion at elevated ΔT values. In contrast, the collector according to the disclosed technology exhibits a substantially more gradual decline in efficiency as ΔT increases. This improved behaviour is attributable to the combined effects of the internal mini-parabolic concentrators, which enhance optical interception and concentration of solar radiation, the sealed greenhouse chamber, which significantly reduces convective heat losses, and the internal solar tracking mechanism, which maintains the absorber at or near an optimal angle of incidence over time. The reduced sensitivity of the disclosed technology efficiency to increasing temperature difference confirms its ability to operate effectively under demanding thermal regimes, such as domestic hot water production at high outlet temperatures or industrial thermal applications. Even at elevated ΔT values, the collector of the disclosed technology maintains a comparatively high level of thermal efficiency, thereby delivering superior useful thermal power relative to conventional flat-plate collectors. This behaviour demonstrates that the technology extends the practical operating range of solar thermal collectors and provides a clear technical advantage in applications requiring high-temperature operation or stable performance under variable thermal conditions.

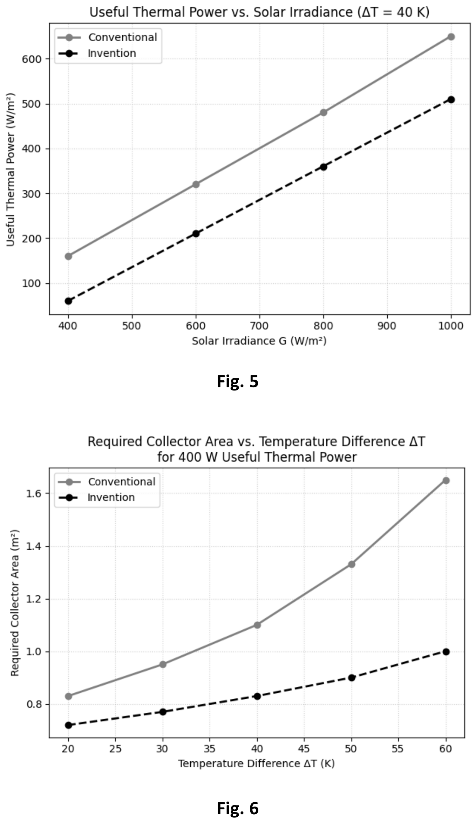

Figure 5 compares the useful thermal power output as a function of incident solar irradiance for a fixed temperature difference ΔT of 40 K. The comparison is made between a conventional flat-plate solar thermal collector and the collector according to the disclosed technology. The curve corresponding to the collector of the disclosed technology exhibits a steeper slope than that of the conventional collector, indicating a higher gradient of useful power with increasing irradiance. This behaviour demonstrates that, even at moderate irradiance levels, the disclosed technology is capable of extracting a greater amount of useful thermal energy per unit area. The increased slope of the curve reflects the direct impact of the internal optical concentration and optimization mechanisms, including the mini-parabolic concentrators, the reduced convective losses provided by the sealed greenhouse chamber, and the internal solar tracking mechanism that maintains favourable incidence conditions on the absorber. As a result, incremental increases in solar irradiance translate more efficiently into useful thermal output. This analysis confirms that the disclosed technology delivers superior instantaneous thermal performance under typical operating conditions corresponding to ΔT = 40 K, which is representative of domestic hot water production and many medium-temperature thermal applications. The enhanced irradiance-to-power conversion behaviour further contributes to reduced required collector area and improved overall system efficiency when compared with conventional flat-plate collectors.

Figure 6 illustrates the minimum collector area required to deliver a constant useful thermal power of approximately 400 W, as a function of the temperature difference ΔT between the absorber or fluid and the ambient environment. The comparison is made between a conventional flat-plate solar thermal collector and the collector according to the disclosed technology. The graph clearly shows that the conventional collector requires a significantly larger surface area in order to achieve the same useful thermal power output, particularly as the temperature difference increases. This behaviour results from the rapid degradation of efficiency of conventional collectors at elevated ΔT values due to increasing convective and radiative losses. In contrast, the collector according to the disclosed technology requires substantially less surface area to deliver the same useful thermal power. Depending on the operating temperature difference, the required collector area is reduced by approximately twenty-five percent to forty-five percent relative to a conventional flat-plate collector. The area reduction becomes increasingly pronounced at higher ΔT values, which are typical of domestic hot water applications operating at temperatures of approximately 50°C to 60°C and of other medium-temperature thermal uses. This performance improvement is a direct consequence of the higher thermal efficiency maintained by the disclosed technology under demanding operating conditions. The combination of internal optical concentration reduced convective losses provided by the sealed greenhouse chamber, and continuous optimization of the angle of incidence by the internal solar tracking system enables the collector of the invention to sustain significantly higher efficiency levels across a wide range of temperature differences and irradiance conditions. Accordingly, for any given useful thermal power requirement, the disclosed technology allows a substantial reduction in installed collector area, typically in the range of approximately twenty-five percent to forty-five percent, while maintaining or exceeding the thermal output of conventional systems. This characteristic represents a decisive advantage for installations with limited available area and for applications requiring high operating temperatures.

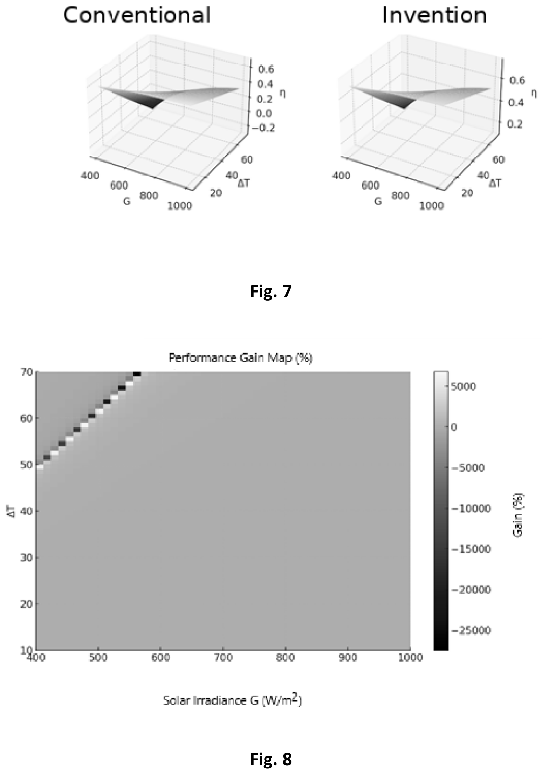

Figure 7 presents a three-dimensional representation of thermal efficiency as a function of both solar irradiance and temperature difference ΔT for a conventional flat-plate solar thermal collector and for the collector according to the disclosed technology. The surface corresponding to the conventional collector exhibits a steep decline in efficiency as the temperature difference increases, particularly at medium and high ΔT values. This behaviour reflects the strong dependence of conventional collectors on convective and radiative losses, which intensify rapidly as the absorber temperature rises relative to the ambient environment. In contrast, the efficiency surface associated with the collector of the disclosed technology remains consistently higher across the entire analysed domain of irradiance and temperature difference. The decline in efficiency with increasing ΔT is significantly more gradual, indicating that the disclosed technology maintains effective thermal performance even under demanding operating conditions. This behaviour is observed for both moderate and high irradiance levels, demonstrating robustness over a wide range of realistic climatic and operational scenarios. The visual comparison of the two three-dimensional surfaces clearly illustrates the superior technical performance of the disclosed technology. By integrating internal mini-parabolic optical concentration, a sealed greenhouse chamber that reduces convective heat losses, and an internal solar tracking mechanism that optimizes the angle of incidence, the disclosed technology achieves a fundamentally different and more favourable efficiency landscape than conventional flat-plate collectors. This multidimensional analysis confirms that the disclosed technology not only improves efficiency at isolated operating points, but consistently outperforms conventional technologies across the combined space of irradiance and temperature difference, thereby providing compelling technical evidence of its superior thermal behaviour and practical advantages.

Figure 8 illustrates a heatmap illustrating the percentage gain in thermal performance of the solar thermal collector according to the disclosed technology relative to a conventional flat-plate collector, as a function of solar irradiance and temperature difference ΔT. The regions represented with higher color intensity correspond to relative efficiency gains exceeding approximately fifty percent. These regions are predominantly located at higher irradiance levels and elevated temperature differences, which are conditions typically associated with high-demand thermal applications such as domestic hot water production at elevated temperatures and medium-temperature industrial uses. The heatmap clearly shows that, under these demanding operating conditions, the collector of the disclosed technology significantly outperforms the conventional technology. The pronounced gains observed in these regions result from the combined effects of internal optical concentration by the mini-parabolic reflectors, the substantial reduction of convective losses provided by the sealed greenhouse chamber, and the continuous optimization of solar incidence achieved by the internal solar tracking mechanism. This visual representation provides clear and comprehensive evidence of the operating domains in which the disclosed technology exceeds the state of the art by a substantial margin. It demonstrates that the advantages of the disclosed technology are not limited to isolated operating points, but extend over broad regions of practical relevance, particularly where conventional collectors suffer the greatest efficiency degradation.

The performance improvements described below arise from the combined effect of the fixed external housing, the sealed internal chamber, the internal optical concentration and the internal angular adjustment of the absorber module as defined in the claims.

In order to illustrate the combined technical effects of the disclosed technology, some experimental embodiments were tested.

### Example 1 - Reduction of Installed Area

In order to illustrate the combined technical effects of the disclosed technology, namely the integration of internal mini-parabolic concentrators, the reduction of convective losses by means of a sealed greenhouse chamber, and the internal solar tracking mechanism of the absorber plate, a comparative performance analysis is presented between a conventional glazed flat-plate solar thermal collector and a collector.

A representative test scenario is assumed, corresponding to typical operating conditions for domestic solar thermal systems. The global solar irradiance is taken as 800 W/m², the ambient temperature is assumed to be 20°C, and the mean temperature of the absorber or heat transfer fluid is assumed to be 60°C, resulting in a temperature difference ΔT of 40 K. For the sake of fairness, the comparison is performed against a glazed flat-plate solar thermal collector.

The classical efficiency expression for flat-plate collectors is adopted, wherein the thermal efficiency is expressed as a function of the optical efficiency and the thermal loss coefficient. Calculations are performed for temperature differences ΔT of 20 K, 30 K, 40 K, 50 K and 60 K.

For the conventional collector, typical parameters are assumed, namely an optical efficiency ηₒ of approximately 0.75 and a first-order thermal loss coefficient a₁ of approximately 6 W/m²·K. For the collector according to the disclosed technology, which incorporates internal mini-parabolic concentrators, a sealed greenhouse chamber and an internal tracking system, an optical efficiency ηₒ of approximately 0.80 and a reduced thermal loss coefficient a₁ of approximately 4 W/m²·K are considered.

Under these assumptions, the useful thermal power per unit area is calculated for each temperature difference. The results demonstrate that, at ΔT values of 20 K and 30 K, the disclosed technology provides efficiency gains in the range of approximately 16 to 24 percent relative to a conventional panel. At higher temperature differences, which are typical of domestic hot water production and more demanding applications, the relative gain increases substantially. For ΔT values between 40 K and 60 K, the disclosed technology delivers efficiency improvements ranging from approximately 33 percent up to approximately 67 percent.

At ΔT equal to 40 K and under an irradiance of 800 W/m², the panel according to the disclosed technology delivers approximately 480 W/m² of useful thermal power, compared with approximately 360 W/m² for a conventional flat-plate collector. This increase in power density allows a reduction of the installed collector area of approximately 25 percent for the same useful thermal output. At higher temperature differences, the required area reduction may reach approximately 40 percent.

By way of illustration, for a representative household requiring approximately 6 kWh per day of domestic hot water energy, assuming five effective sunshine hours per day and a temperature difference of approximately 40 K, a conventional flat-plate collector delivers approximately 1.8 kWh per square meter per day, requiring an installed area of approximately 3.3 m². Under identical conditions, the panel according to the disclosed technology delivers approximately 2.4 kWh per square meter per day, requiring an installed area of approximately 2.5 m². This corresponds to a reduction in required collector area of approximately 25 percent, attributable to the combined effects of internal greenhouse operation, mini-parabolic concentration and reduced convective cooling.

These results demonstrate that the disclosed technology enables the replacement of larger conventional installations with more compact systems, particularly advantageous for roofs with limited available area, urban buildings and architecturally integrated installations.

**Table 1 - Comparative results**

| **ΔT (K)** | **η_conventional** | **η_new (mini-parab.)** | **Q_conv (W/m²)** | **Q_new (W/m²)** | **Relative gain η (new/conv)** | **Area reduction for same power** |
|---|---|---|---|---|---|---|
| 20 | 0.60 | 0.70 | 480 | 560 | 1.17 | ≈ 14 % less area |
| 30 | 0.525 | 0.65 | 420 | 520 | 1.24 | ≈ 19 % less area |
| 40 | 0.45 | 0.60 | 360 | 480 | 1.33 | ≈ 25 % less área |
| 50 | 0.375 | 0.55 | 300 | 440 | 1.47 | ≈ 32 % less área |
| 60 | 0.30 | 0.50 | 240 | 400 | 1.67 | ≈ 40 % less area |

The comparative results, illustrated in Table 1, show that the integration of internal mini-parabolic concentrators increases the interception of useful solar radiation and improves the optical efficiency of the collector. The sealed internal greenhouse chamber significantly reduces convective heat losses, thereby lowering the global thermal loss coefficient. Furthermore, the internal solar tracking mechanism continuously optimizes the angle of incidence of solar radiation on the absorber, increasing instantaneous and annual optical gains.

The combined effect of these features allows the collector according to the disclosed technology to deliver up to approximately 480 W/m² at a temperature difference of 40 K under 800 W/m² of irradiance, compared with approximately 360 W/m² for a conventional collector operating under identical conditions. In typical residential applications with approximately five hours of effective daily sunshine, this translates into a significant annual energy gain or, alternatively, a reduction of approximately 25 to 40 percent in the installed collector area required to meet the same energy demand.

The absorber of the disclosed technology operates within a closed internal chamber with reduced convection, analogous to a collector operating inside a mini-greenhouse. This configuration maintains higher surface temperatures, reduces wind-dependent cooling and preserves efficiency at elevated operating temperatures, a behaviour that is not achievable with conventional flat-plate collectors exposed directly to ambient airflow.

### Wind Resistance and Structural Behaviour

The disclosed technology provides a substantial structural improvement over conventional solar thermal collectors installed on externally inclined support structures. While conventional systems rely on elevated metal frames to achieve optimal inclination, the disclosed technology maintains the external housing rigidly fixed to the roof or supporting surface, with angular adjustment performed exclusively inside the collector. This configuration significantly reduces bending moments induced by wind loads.

The dynamic wind pressure is modelled using standard expressions derived from EN 1991-1-4:2005 Eurocode 1 - Actions on structures - Part 1-4, wherein the wind pressure is proportional to the square of the wind speed and depends on height and exposure factors. The aerodynamic force acting on the panel is proportional to the projected area and aerodynamic coefficient. The bending moment at the anchoring points is determined by the product of this force and the lever arm between the panel's centre of pressure and the structural support plane.

In a conventional inclined installation, the center of aerodynamic load is typically located at a distance of approximately 0.8 meters from the roof plane. In the disclosed technology, the external housing is mounted directly against the roof, resulting in a lever arm of approximately 0.15 meters. Consequently, for the same wind force, the bending moment in the disclosed technology is reduced by a factor of approximately five to six, corresponding to a reduction of approximately 80 percent.

For representative wind speeds of 40 m/s and 50 m/s at installation heights of 6 meters and 18 meters, calculations show that the bending moments acting on a conventional inclined collector exceed 1.8 kNm and may reach over 3.5 kNm, whereas the disclosed technology experiences moments below approximately 0.7 kNm under the same conditions. This significant reduction allows substantially higher admissible wind speeds for the same anchoring capacity and greatly improves resistance to storms and cyclonic events.

### External Housing Structural Criteria

The external housing of the collector according to the disclosed technology is designed to satisfy structural, environmental and thermal requirements ensuring long-term performance and integrity. The housing is required to withstand positive and negative wind pressures, impact loads, vibration, installation loads and thermal expansion.

Typical design values correspond to wind pressures up to approximately 2.0 kPa for residential buildings at heights around 6 meters and up to approximately 3.5 kPa for buildings at heights around 18 meters, with higher values applicable in exposed or cyclonic regions. The housing functions as a structural plate with sufficient stiffness to preserve optical alignment.

In an embodiment, the housing wall thickness is from 1.2 mm to 2.0 mm when fabricated from anodized aluminium or galvanized steel, and from 2.0 mm to 6.0 mm when fabricated from reinforced polymers or fiber-reinforced composites. These thicknesses ensure that stresses induced by wind-generated bending moments remain below the admissible stress of the selected material, typically around 80 MPa for aluminium and 160 MPa for steel.

The housing materials are selected to exhibit high resistance to ultraviolet radiation, satisfying accelerated aging requirements equivalent to at least 2,000 to 5,000 hours of UV exposure in accordance with EN ISO 4892-2:2013 - Plastics - Methods of exposure to laboratory light sources, while retaining at least 70 percent of mechanical properties and at least 80 percent of surface appearance. Preferred materials include anodized aluminium, fiber-reinforced composites with UV-resistant gelcoats, and high-UV-resistance polymers such as ASA or UV-coated polycarbonate.

The housing must maintain dimensional stability under continuous operating temperatures from -20 °C to +90 °C and withstand occasional internal temperatures of 80 to 120 °C generated by the greenhouse effect. Materials with low thermal expansion coefficients, such as aluminium, steel or glass-fiber-reinforced composites, are preferred to maintain optical alignment of the internal mini-parabolic concentrators and the articulated absorber module.

The housing further complies with impact resistance requirements, including standardized hail impact tests according to ISO 9806:2017 - Solar thermal collectors - Test methods, and incorporates sealing, drainage and thermal expansion allowances to maintain watertightness and structural integrity throughout its service life.

### Integration of the Thermal Tube with the Parabolic Geometry

The disclosed technology further comprises an optimized optical and thermal integration between the internal mini-parabolic concentrators and the thermal receiver tube. Each mini-concentrator is configured as a two-dimensional parabolic reflector designed to focus incident solar radiation onto a longitudinal focal line coincident with the position of the thermal tube.

The parabolic geometry is defined such that the focal length corresponds to the structural position of the tube within the internal module. The tube is positioned with its geometric center substantially coincident with the focal line, within a mounting tolerance from 3 mm to 5 mm, ensuring full interception of the concentrated radiation.

The diameter of the thermal tube is selected as a function of the geometric concentration ratio, which is determined by the ratio between the aperture width of the parabolic reflector and the tube diameter. In an embodiment, tube diameters from 12 mm to 18 mm are used, corresponding to standard hydraulic tubing dimensions and ensuring complete interception of the solar focal spot, even when accounting for manufacturing tolerances and the finite angular diameter of the sun.

The thermal tube is preferably manufactured from copper, due to its high thermal conductivity, or from stainless steel for high-temperature or corrosive environments. The tube may include a selective coating or low-emissivity absorptive surface to further enhance thermal performance.

### Performance on North-Facing Roofs and Orientation Decoupling

The disclosed technology is specifically designed to maintain significant thermal output even when installed on roofs with unfavourable orientations, including north-facing, northeast-facing or northwest-facing roofs. Unlike conventional flat-plate collectors, in which the optical orientation is rigidly coupled to the roof orientation, the disclosed technology decouples the optical orientation of the absorber from the structural orientation of the housing.

The external housing remains fixed to the roof, while the internal absorber module is articulated and adjustable within an angular range typically from -15 degrees to +35 degrees relative to the housing plane. This internal adjustment allows the absorber to be oriented toward more favourable solar angles, even when the roof orientation is unfavourable.

The internal mini-parabolic concentrators further redirect incoming radiation toward the absorber, including radiation entering the front glazing at highly oblique angles. As a result, the disclosed technology captures both diffuse radiation and high-altitude direct radiation, particularly during summer conditions.

In representative scenarios corresponding to central Portugal, a north-facing roof with an inclination of approximately 30 degrees equipped with a conventional flat-plate collector supplies only a small fraction of the daily domestic hot water demand. Under identical conditions, the panel according to the disclosed technology achieves a substantially higher energy output, corresponding to an increase of more than 200 percent relative to the conventional panel and enabling meaningful annual energy coverage.

The calculations and analyses demonstrate that the solar thermal panel now disclosed achieves substantially improved thermal performance, reduced structural loads and enhanced installation flexibility compared with conventional systems. The internal concentration, greenhouse operation and tracking mechanism combine to deliver higher efficiency, reduced required area, superior wind resistance and effective operation even under unfavourable roof orientations, thereby constituting a clear technical advancement over the prior art.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. An adjustable solar thermal panel for optimizing solar efficiency independently of the orientation and inclination of a supporting surface the panel being configured as a modular unit, comprising:
a fixed external housing configured to be rigidly mounted to a roof, façade or other support without external inclination adjustment;
an internal optical-thermal module arranged within the housing and comprising:
at least one thermal absorber including at least one hydraulic tube for conveying a heat-transfer fluid;
a plurality of parabolic reflective elements configured to concentrate incident solar radiation onto the hydraulic tube along a longitudinal focal line;
a sealed internal chamber formed within the housing and enclosing the internal optical-thermal module, the sealed internal chamber being configured to reduce convective heat losses; and
an internal mechanical adjustment mechanism comprising a worm screw mechanism mechanically coupled to the internal optical-thermal module and configured to adjust an angular position of the optical-thermal module relative to the fixed external housing;
wherein the internal mechanical adjustment mechanism defines at least four predefined angular positions of the optical-thermal module corresponding to seasonal solar positions;
wherein adjustment of the angular position is performed exclusively inside the fixed external housing such that the external housing remains stationary during operation, thereby reducing wind-induced mechanical loads and maintaining optical alignment independently of the orientation and inclination of the supporting surface; and
wherein the panel is configured to be combined with a plurality of identical panels in modular arrays connected hydraulically and/or structurally to form scalable solar thermal installations.

2. The adjustable solar thermal panel according to the previous claim, wherein the internal optical-thermal module is adjustable over an angular range of at least 60 degrees relative to the fixed external housing.

3. The adjustable solar thermal panel according to any of the previous claims, wherein the worm screw mechanism positions the optical-thermal module with an angular accuracy of ±1 degree.

4. The adjustable solar thermal panel according to any of the previous claims, wherein the fixed external housing is mounted such that a distance between a center of aerodynamic load and a structural support plane is less than 0.2 m.

5. The adjustable solar thermal panel according to any of the previous claims, wherein the worm screw mechanism comprises a manual knob.

6. The adjustable solar thermal panel according to any of the previous claims, wherein the protective external structure is coated with a film resistant to UV radiation and capable of protecting the parabolic reflective elements configured to concentrate radiation onto a separate thermal absorber from dust and airborne particles.

7. The adjustable solar thermal panel according to the previous claim, wherein the protective film comprises a transparent material selected from a list consisting of glass, polycarbonate (PC), polymethyl methacrylate (PMMA), polyamide-imide (PAI), polyester ether ketone (PEEK), polyetherimide (PEI) and their combinations thereof.

8. The adjustable solar thermal panel according to any of the previous claims, wherein the panel is configured as a standardized modular unit adapted to be hydraulically connected in series and/or in parallel with other identical panels to form scalable solar thermal systems.

9. The adjustable solar thermal panel according to any of the previous claims, wherein the protective external structure is configured to offer resistance to extreme weather conditions, including strong winds and cyclones, ensuring safety and durability.

10. The adjustable solar thermal panel according to any of the previous claims, wherein the adjustable worm screw mechanism comprises mechanical stops defining the parabolic reflective elements configured to concentrate radiation onto a separate thermal absorber in four predefined positions corresponding to the four seasons.

11. The adjustable solar thermal panel according to any of the previous claims, wherein the parabolic reflective elements configured to concentrate radiation onto a separate thermal absorber are arranged within the structure to optimize solar energy absorption and minimize heat loss.

12. The adjustable solar thermal panel according to any of the previous claims, wherein the parabolic reflective elements are arranged symmetrically with respect to the thermal absorber to maximize concentration of solar radiation while limiting radiative and convective heat losses.

13. The adjustable solar thermal panel according to any of the previous claims, wherein the external housing and the internal optical-thermal module are dimensioned so as to allow multiple panels to be arranged side-by-side or stacked while maintaining continuous optical and hydraulic functionality.

14. The adjustable solar thermal panel according to any of the previous claims, wherein the fixed external housing is configured for installation on vertical or substantially vertical facades, enabling effective solar thermal operation independently of façade cardinal orientation.
